Europäisches Patentamt

European Patent Office

Office européen des brevets

(11) Veröffentlichungsnummer: **0 263 276**
A1

(12) **EUROPÄISCHE PATENTANMELDUNG**

(21) Anmeldenummer: 87112124.0

(22) Anmeldetag: 21.08.87

(51) Int. Cl.⁴ **G06F 13/40**

(30) Priorität: 09.09.86 CH 3613/86

(43) Veröffentlichungstag der Anmeldung:
**13.04.88 Patentblatt 88/15**

(84) Benannte Vertragsstaaten:
**CH DE FR GB LI**

(71) Anmelder: **BBC Brown Boveri AG**

**CH-5401 Baden(CH)**

(72) Erfinder: **Kirrmann, Hubert**
**Im Rüteli 17**
**CH-5405 Dättwil(CH)**

(54) **Vorrichtung zur Kopplung von Steckbaugruppen mechanisch und/oder signalmässig nicht kompatibler Bussysteme.**

(57) Die Erfindung betrifft Bussysteme, bei denen die Steckbaugruppen (VME) mehrpolige Steckkontakte (VME1, VME2) aufweisen und in Baugruppenträger mit entsprechend angepassten Steckkontakten und Rückwandverdrahtung einsteckbar sind. Bei solchen Bussystemen wird durch die Erfindung vorgeschlagen, mindestens eine in einen Baugruppenträger einer der Bussysteme einsteckbare Steckkarte (8) vorzusehen und diese mit mindestens einem Teil einer zur signalmässigen Anpassung von Steckbaugruppen aus zwei nicht kompatiblen Bussystemen erforderlichen Elektronik zu versehen. Weiter soll eine Steckbaugruppe des anderen Bussystems über ihren mehrpoligen Steckkontakt (iPSB, iLBX) mit der genannten Steckkarte (8) verbindbar sein.

FIG. 4

EP 0 263 276 A1

# Vorrichtung zur Kopplung von Steckbaugruppen mechanisch und/oder signalmässig nicht kompatibler Bussysteme

## Technisches Gebiet

Die vorliegende Erfindung betrifft eine Vorrichtung zur Kopplung von Steckbaugruppen mechanisch und/oder signalmässig nicht kompatibler Bussysteme. Sie betrifft insbesondere eine solche Vorrichtung für solche Bussysteme, bei denen die Steckbaugruppen mehrpolige Steckkontakte aufweisen und in Baugruppenträger mit entsprechend angepassten Steckkontakten und Rückwandverdrahtung (backplane) einsteckbar sind.

## Stand der Technik

Die derzeit meist verwendeten unter den 32-Bit-Bussystemen sind einerseits der sog. VME-Bus und andererseits der sog. Multibus II. Der VME-Bus ist beispielsweise beschrieben in einer Druckschrift der Firma Philips, Eindhoven, Niederlande von 1983 mit dem Titel "VMEbus Specification Manual", Rev. B.

Eine Beschreibung des Multibus II findet sich beispielsweise in einer Druckschrift der Fa. Intel Corp., Santa Clara, U.S.A. von 1983 mit dem Titel "Multibus II Bus Architecture Specification Handbook", Best.-Nr. 146077-B. Multibus ist auch ein Warenzeichen dieser Firma.

Beide Bussysteme haben in technischer Hinsicht gegeneinander Vor-als auch Nachteile. Ausschlaggebend für die Wahl des einen oder des anderen Bussystems ist weniger dessen Eignung für den jeweils gewünschten Zweck als vielmehr die Entscheidung für einen bestimmten Hersteller von elektronischen Bauelementen beispielsweise bei der Entwicklung und Fertigung von Steckbaugruppen. Die beiden genannten Bussysteme sind nicht miteinander kompatibel. Sie wurden unabhängig voneinander entworfen und verwenden z.T. recht unterschiedliche Technik. Sie unterscheiden sich sowohl hinsichtlich der mechanischen Normvorschriften, insbesondere was die Länge der Steckkarten anbetrifft, als auch hinsichtlich der Busprotokolle. Während der VME-Bus nur Karten im sog. Doppel-Europa-Format (233.160 mm²) zulässt, sind für den Multibus II Karten im Format Doppel-Europa-Lang (280.160 mm²) erforderlich. Der VME-Bus ist nicht multiplexiert, während der Multibus II multiplexiert ist.

Das VME-Bussystem ist etwa drei Jahre länger als das Multibus II-Bussystem auf dem Markt. Insofern sind für das VME-Bussystem bereits eine ganze Reihe von Steckbaugruppen mit Funktionen auf dem Markt erhältlich, die für das Multibus II-Bussystem noch nicht existieren. Die Möglichkeit einer Kombination von Steckbaugruppen aus beiden Systemen würde die Flexibilität der Anwender wesentlich erhöhen und die Bindung an einen bestimmten Hersteller elektrischer Bauelemente mildern. Preisunterschiede könn ten ausgenutzt und Neuentwicklungen vermieden werden.

## Darstellung der Erfindung

Es ist Aufgabe der vorliegenden Erfindung, eine Vorrichtung der eingangs genannten Art anzugeben.

Insbesondere soll die durch die Erfindung geschaffene Vorrichtung die Verwendung von Steckbaugruppen aus dem VME-Bussystem im Multibus II-Bussystem ermöglichen.

Die genannten sowie weitere Aufgaben werden gemäss der vorliegenden Erfindung gelöst durch die Angabe von neuen Vorrichtungen, wie sie in den Ansprüchen gekennzeichnet sind.

## Kurze Beschreibung der Zeichnungen

Weitere Merkmale und Vorteile der vorliegenden Erfindung ergeben sich aus der nachstehenden ausführlichen Beschreibung insbesondere unter Berücksichtigung der beigefügten Zeichnungen. Es zeigen:

Fig. 1 in perspektivischer Darstellung einen typischen Baugruppenträger eines Bussystems mit zwei darin eingesteckten Steckbaugruppen,

Fig. 2 in schematischer Darstellung eine kürzere Steckbaugruppe in Seitenansicht,

Fig. 3 in schematischer Darstellung eine längere Steckbaugruppe in Seitenansicht,

Fig. 4 in schematischer Darstellung eine mit einer Steckkarte gemäss einer ersten Ausführungsform der Erfindung auf das Mass der längeren Steckbaugruppe von Fig. 3 verlängerte kürzere Steckbaugruppe gemäss Fig. 2,

Fig. 5 wiederum in schematischer Darstellung mehrere Vorrichtungen nach der Erfindung mit zwei Steckkarten, die über jeweils ein mehrpoliges Flachbandkabel verbunden sind und

Fig. 6 ein Beispiel für eine Elektronik mit der eine oder zwei miteinander verbundene Steckkarten nach der Erfindung versehen sein kann bzw. können.

## Wege zur Ausführung der Erfindung

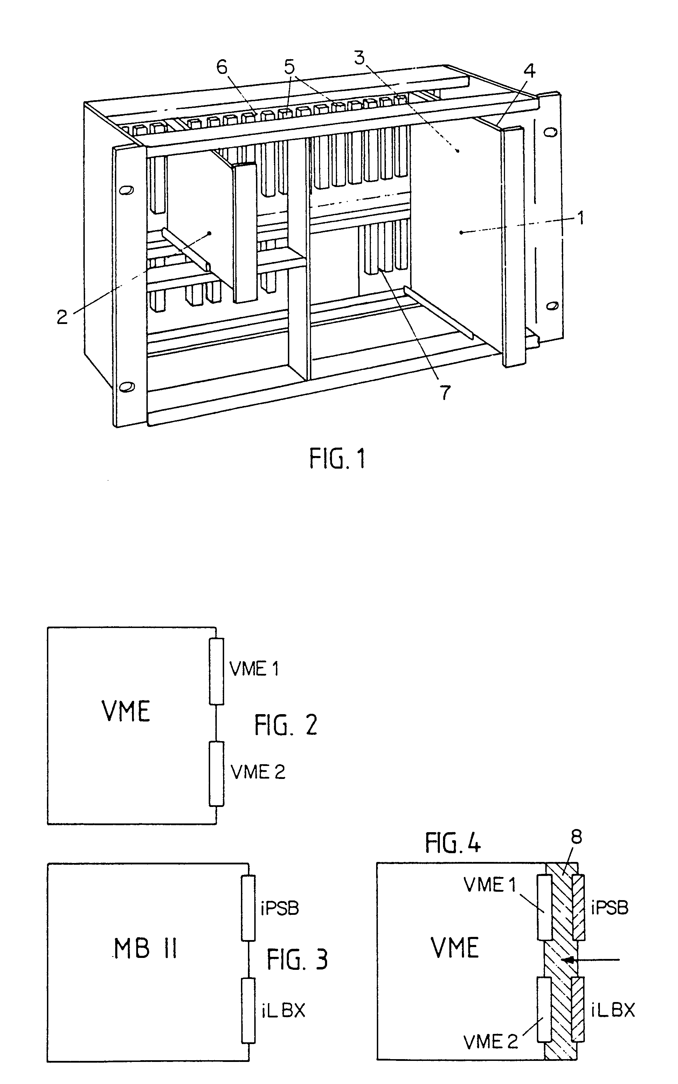

Es wird nunmehr auf die Zeichnungen Bezug genommen. In Fig. 1 ist ein typischer Baugruppenträger eines Bussystems dargestellt. Es handelt sich hier um einen Baugruppenträger des schon erwähnten Bussystems Multibus II. In den dargestellten Baugruppenträger sind zwei Steckbaugruppen 1 und 2 eingesteckt. Die Steckbaugruppen 1 bzw. 2 sind Leiterplatten mit Leiterbahnen auf ihrer einen Seite, beispielsweise der Seite 3 von Steckbaugruppe 1 und elektronischen Bauelementen auf deren anderen Seite, beispielsweise der Seite 4 der Steckbaugruppe 1. An ihrer hinteren Kante tragen die Steckbaugruppen 1, 2 wenigstens einen mehrpoligen Steckkontakt (in Fig. 1 nicht sichtbar), der mit wenigstens einem entsprechenden Steckkontakt 5 an der Rückwand des Baugruppenträgers im eingesteckten Zustand in Steckverbindung ist. An der Rückwand des dargestellten Baugruppenträgers von Fig. 1 sind eine Vielzahl von solchen mehrpoligen Steckkontakten 5 zu sehen. Die Steckkontakte 5 sind sämtliche miteinander verbunden und bilden mit ihrer gegenseitigen Verbindung die sogenannte Rückwandverdrahtung des Bau gruppenträgers. Bei dem in Fig. 1 dargestellten Baugruppenträger gibt es, dem Multibus II-Bussystem entsprechend, eine obere 6 und eine untere Rückwandverdrahtung. Die Rückwandverdrahtungen 6, 7 bilden praktisch den Bus.

In Fig. 2 ist rein schematisch eine Steckbaugruppe in Seitenansicht dargestellt. Sie soll beispielsweise zum bereits erwähnten VME-Bussystem gehören und ist entsprechend bezeichnet. An ihrer Rückseite weist sie zwei mehrpolige Steckkontakte VME1 und VME2 auf. Sie soll, wie die Steckbaugruppe 1 von Fig. 1, in einen Baugruppenträger, allerdings einem solchen des VME-Bussystems, einsteckbar sein.

Fig. 3 zeigt entsprechend zu Fig. 2 eine Steckbaugruppe, die jedoch zum Multibus II-Bussystem gehören soll und die mit MBII bezeichnet ist. Auch diese weist an ihrer Rückseite zwei mehrpolige Steckkontakte iPSB und iLBX auf. Die dargestellte Steckbaugruppe MBII könnte auch die Steckbaugruppe 1 von Fig. 1 sein. Wie aus der Untereinanderstellung der Figuren 2 und 3 zu sehen ist, ist die Multibus II-Steckbaugruppe MBII bei gleicher Höhe länger als die VME-Steckkarte. Ausser derart in mechanischer Hinsicht, sollen die Steckbaugruppen auch in signalmässiger Hinsicht nicht miteinander kompatibel sein. Die Bussysteme, denen sie angehören, sollen unterschiedliche, nicht kompatible Busprotokolle aufweisen. Dies ist beim VME-Bussystem und dem Multibus II-Bussystem tatsächlich auch der Fall.

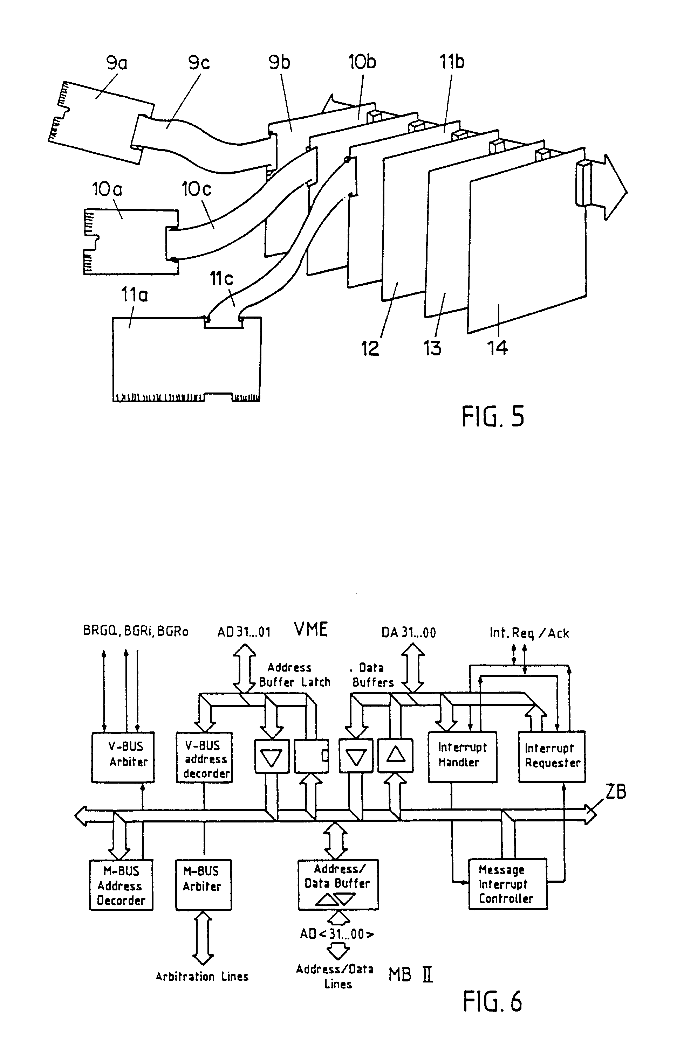

Gemäss einer ersten Ausführungsform der Erfindung ist eine Steckkarte vorgesehen, die aufeinander gegenüberliegenden Seiten jeweils mit mindestens einem mehrpoligen Steckkontakt versehen ist und die als Verlängerungsele ment für eine kürzere Steckbaugruppe eines ersten Bussystems, wie der Steckbaugruppe VME von Fig. 2, auf das Mass einer gleich hohen, jedoch längeren Steckbaugruppe eines anderen Bussystems, wie der Steckbaugruppe MBII von Fig. 3, auf die erstgenannte kürzere Steckbaugruppe aufsteckbar ist. Im auf die kürzere Steckbaugruppe aufgesteckten Zustand ist die erfindungsgemässe Steckkarte gemeinsam mit der kürzeren Steckbaugruppe in einem Baugruppenträger des Bussystems mit den längeren Steckbaugruppen in gleicher Weise wie eine längere Steckbaugruppe einsteckbar. In Fig. 4 ist eine Steckkarte nach der ersten Ausführungsform der Erfindung im auf eine Steckbaugruppe VME aufgesteckten Zustand dargestellt und mit 8 bezeichnet. Die kürzere VME-Steckbaugruppe ist über ihre beiden mehrpoligen Steckkontakte VME1 and VME2 mit der Steckkarte 8 verbunden.

Die Steckkarte 8 von Fig. 1 soll mit einer zur signalmässigen Anpassung der VME-Steckbaugruppe an das Multibus II-Bussystem erforderlichen Elektronik versehen sein. Diese Elektronik ist in Fig. 4 nicht dargestellt. Auf sie wird noch gesondert bei der Erläuterung von Fig. 6 eingegangen.

Gemäss einer zweiten Ausführungsform der Erfindung sind zwei Steckkarten vorgesehen, die über ein mehrpoliges Kabel, beispielsweise ein Flachbandkabel, miteinander verbunden sind. Die eine der beiden Steckkarten soll in einem Baugruppenträger eines ersten und die andere der Steckkarten in einen Baugruppenträger eines zweiten Bussystems einsteckbar sein. Die beiden Steckkarten sind zusammen mit einer Elektronik versehen, die zur Anpassung von Steckbaugruppen aus beiden Bussystemen erforderlich ist. Mit den beiden miteinander über das mehr polige Kabel verbundenen Steckkarten können die Busse zweier Baugruppenträger von zwei unterschiedlichen Bussystemen miteinander verbunden werden. Ueber die Busse und die genannte Verbindung können dann auch zwei Steckbaugruppen in den die beiden Baugruppenträgern miteinander in Verbindung treten.

Fig. 5 zeigt in schematischer Darstellung drei Paare von Steckkarten 9a, 9b, 10a, 10b und 11a, 11b, die jeweils über ein Flachbandkabel 9c, 10c und 11c miteinander verbunden sind. Die beiden den einzelnen Steckkartenpaaren zugehörigen Steckkarten unterscheiden sich in ihrer Form und Grösse deutlich. Die Steckkarten 9b, 10b und 11b sollen wie die Steckbaugruppen 12, 13 und 14 jeweils in dem gleichen Baugruppenträger eingesteckt sein, was in Fig. 5 lediglich durch den breiten Doppelpfeil angedeutet ist. Die Steckkarten 9a, 10a und 11a sollen dagegen in jeweils unterschiedliche Baugruppenträger eingesteckt werden. Mittels der Anordnung von Fig. 5 könnte beispielsweise eine Steckbaugruppe, die in einem Baugruppenträger enthalten ist, in den die Steckkarte 9a eingesteckt wird, mit einer der Steckbaugruppen 12, 13 oder 14 gekoppelt werden. Andererseits wäre es denkbar, dass die zuerst genannte Steckbaugruppe mit einer Steckbaugruppe in Verbindung treten könnte, die in einem Baugruppenträger steckt, in den die Steckkarte 10a eingesteckt wird. In diesem Falle würde die Kopplung der beiden Steckbaugruppen über zwei Paare von Steckkarten erfolgen, die jeweils über ein mehrpoliges Kabel miteinander verbunden sind. Der Baugruppenträger in dem die Steckkarten 9b, 10b und 11b sowie die Steckbaugruppen 12, 13 und 14 stecken könnte in diesem Fall als Zwischenbussystem für die Kopplung von mehr als beispielsweise nur zwei verschiedenen Bussystemen bzw. ihren Steckbaugruppen ausgebildet sein. Die Steckbaugruppen 12-14 könnten für eine solche Verwendung, beispielsweise als Zwischenspeicher etc. speziell unterstützend ausgebildet sein.

In Fig. 6 ist ein Beispiel für eine Elektronik dargestellt mit der die vorstehend erwähnten Steckkarten versehen sein können. Grundsätzlich hängt die Art der Elektronik von den Eigenschaften der Steckbaugruppen aus den unterschiedlichen Bussystemen ab, die miteinander gekoppelt werden sollen. Die Steckbaugruppen können unterschieden werden in solche, die Master ihres Busses sein können, in solche, die lediglich Slave sein können und in solche, die beide Funktionen annehmen können.

Soll beispielsweise eine Steckbaugruppe aus dem VME-Bussystem, die lediglich Slave sein kann (typischerweise ein Speicher) mittels einer einzigen Steckkarte, wie der Steckkarte 8 von Fig. 4, in einen Multibus II-Baugruppenträger, eingesteckt werden, um dort mit einer Steckbaugruppe mit Masterfunktion zu kommunizieren, so genügt es, in der Elektronik, mit der die Steckkarte versehen ist, im wesentlichen einen Adress-und einen Datenpuffer vorzusehen. Solche Puffer sind erforderlich weil im Beispielsfall der Kombination des VME-Bussystems mit dem Multibus II-Bussystem zu beachten ist, dass beim VME-Bussystem Adressen-und Daten parallel auf einem separaten Adressbus und einem separaten Datenbus übertragen werden. Beim Multibus II-Bussystem werden Adressen und Daten hingegen auf den gleichen Busleitungen multiplexiert übertragen.

Die schon angesprochene Elektronik von Fig. 6 ist für den an sich aufwendigsten Fall vorgesehen, indem mehrere Steckbaugruppen wieder beispielsweise des VME-Bussystems mit mehreren Steckbaugruppen des auch wieder beispielsweise angenommenen Multibus II-Bussystems sowohl in Master-als auch in Slave-Funktion in Kontakt treten können sollen und umgekehrt. Die in Fig. 6 dargestellte Elektronik wird daher vornehmlich mit der zweiten Ausführungsform der Erfindung mit zwei über ein mehrpoliges Kabel miteinander verbundenen Steckkarten zur Anwendung kommen.

Die Elektronik von Fig. 6 gruppiert sich um einen Zwischenbus ZB. Im unteren Teil von Fig. 6 sind dem Multibus II-Bussystem angepasste Funktionselemente dargestellt. Im oberen Teil von Fig. 6 sind solche dargestellt, die den Kontakt zum VME-Bussystem vermitteln. Vorzugsweise würden die im unteren Teil von Fig. 6 dargestellten Funktionselemente auf der in einen Baugruppenträger des Multibus II-Bussystems einsteckbaren Steckkarte angeordnet und die im oberen Teil von Fig. 6 dargestellten Funktionselemente auf der in einen Baugruppenträger des VME-Bussystems einsteckbaren Steckkarte.

Auf jeder Seite des Zwischenbusses ZB von Fig. 6 sind Adress-und Datenpuffer vorgesehen. Auf der VME-Seite sind diese, aus den schon erläuterten Gründen, getrennt und auf der Multibus II-Seite in einer Einheit zusammengefasst. Für den Adressentransport in Richtung VME-Bussystem ist statt eines Adresspuffers ein Adress-Latch vorgesehen. Weiter gibt es auf beiden Seiten des Zwischenbusses jeweils einen Adressdecoder, der eine Bus-Arbitrationsschaltung auf der anderen Seite beaufschlagt. Ueber diese kann das VME-Bussystem Master des Multibus II-Bussystems werden und umgekehrt. Schliesslich ist noch eine Unterbrechungslogik im rechten Teil von Fig. 6 vorgesehen, mit der jeweils Unterbrechungsanforderungen von einem Bussystem auf das andere übertragen werden können. Die Unterbrechungslogik umfasst auf der VME-Seite einen sog. Interrupt Handler und einen sog. Interrupt Requester und auf der Multibus II-Seite einen sog. Message Interrupt Controller. Sämtliche in Fig. 6 dargestellten Funktionselemente sind auf dem Markt als zum grössten Teil integrierte Schaltkreise erhältlich. Ihre Funktion im einzelnen, sowie ihr konkretes Zusammenwirken braucht daher hier nicht näher beschrieben werden.

## Ansprüche

1. Vorrchtung zur Kopplung von Steckbaugruppen (1, 2, VME, MBII, 12, 13, 14) mechanisch und/oder signalmässig nicht kompatibler Bussysteme, bei denen die Steckbaugruppen mehrpolige Steckkontakte (VME1, VME2; iPSB, iLBX) aufweisen und in Baugruppenträger mit entsprechend angepassten Steckkontakten (5) und Rückwandverdrahtung (6, 7) einsteckbar sind, dadurch gekennzeichnet,
-dass mindestens eine in einen Baugruppenträger eines der Bussysteme einsteckbare Steckkarte (8, 9a-11b) vorgesehen ist,
-dass die Steckkarte mit mindestens einem Teil einer zur signalmässigen Anpassung von Steckbaugruppen aus zwei Bussystemen erforderlichen Elektronik versehen ist und
-dass mindestens eine Steckbaugruppe des anderen Bussystems über ihren mehrpoligen Steckkontakt mit der genannten Steckkarte verbindbar ist.

2. Vorrchtung nach Anspruch 1, dadurch gekennzeichnet, dass zur Herstellung der Verbindung mit der mindestens einen Steckbaugruppe des anderen Bussystems neben der einen bereits genannten Steckkarte (9a, 10a, 11a) eine weitere Steckkarte (9b, 10b, 11b) vorgesehen ist, die in einen Baugruppenträger des anderen Bussystems einsteckbar ist, dass auch die weitere Steckkarte mit einem Teil der zur signalmässigen Anpassung von Steckbaugruppen aus zwei Bussystemen erforderlichen Elektronik versehen ist und dass die beiden Steckkarten über ein mehrpoliges Kabel (9c, 10c, 11c) miteinander verbunden sind.

3. Vorrchtung nach Anspruch 1, dadurch gekennzeichnet, dass bei in mechanischer Hinsicht im wesentlichen lediglich unterschiedlicher Länge der zwei Bussystemen zugehörigen Steckbaugruppen die Steckkarte auf einander gegenüberliegnden Seiten jeweils mit einem mehrpoligen Steckkontakt versehen ist, dass sie als Verlängerungselement auf Steckbaugruppen aufsteckbar ist, die zum Bussystem mit den kürzeren Steckbaugruppen gehören und dass die so ausgebildete Steckkarte (8) im auf eine kürzere Steckbaugruppe aufgesteckten Zustand gemeinsam mit dieser wie eine Steckbaugruppe, die zum Bussystem mit den längeren Steckbaugruppen gehört, in einen Baugruppenträger des Bussystems mit den längeren Steckbaugruppen einsteckbar ist.

4. Vorrchtung nach Anspruch 1, dadurch gekennzeichnet, dass die auf der mindestens einen Steckkarte vorgesehene Elektronik funktionell derart ausgebildet ist, dass die mindestens eine Steckbaugruppe des anderen Bussystems je nach Bedarf Master und/oder Slave einer Steckbaugruppe des einen Bussystems sein kann.

5. Vorrichtung nach Anspruch 1, dadurch gekennzeichnet, dass die auf der mindestens einen Steckkarte vorgesehene Elektronik jeweils mindstens eines der nachstehenden Funktionselemente aufweist: einen Adress-und Datenpuffer, einen Adressdecoder, eine Busarbitrationsschaltung sowie eine Unterbrechungslogik.

6. Vorrichtung nach Anspruch 2, dadurch gekennzeichnet, dass die beiden über das mehrpolige Kabel miteinander verbundenen Steckkarten jeweils als Teil der Elektronik, mit der sie versehen sind, mindestens eines der nachstehenden Funktionselemente aufweisen: einen Adress-und Datenpuffer, einen Adressdecoder, eine Busarbitrationsschaltung sowie eine Unterbrechungslogik, dass die genannten Funktionselemente auf den beiden Steckkarten an die jeweiligen Bussysteme, in deren Baugruppenträger die Steckkarten einsteckbar sind, angepasst sind und dass das mehrpolige Kabel als eine Art von Zwischenbus ausgebildet ist.

FIG. 1

VME

VME 1

VME 2

FIG. 2

MB II

iPSB

iLBX

FIG. 3

FIG. 4

VME

VME 1

VME 2

iPSB

iLBX

8

0 263 276

FIG. 5

FIG. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | IEEE TRANSACTIONS ON NUCLEAR SCIENCE, Band NS-32, Nr. 1, Februar 1985, Seiten 195-201, New York, US; D. HUSBY et al.: "The fermilab ACP multiprocessor project" * Seite 196, rechte Spalte; Seite 200 * --- | 1 | G 06 F 13/40 |
| A | MINI-MICRO SYSTEMS, Band 18, Nr. 12, September 1985, Seiten 129,130,133,134,137, Boston, US; J. VICTOR: "Top 32-bit buses claim multiprocessing edge" * Insgesamt * --- | 1 | |
| A | IMPLEMENTING FUNCTIONS: MICROPROCESSORS AND FIRMWARE, 7TH EUROMICRO SYMPOSIUM ON MICROPROCESSING AND MICROPROGRAMMING, Paris, 8.-10. September 1981, Seiten 181-190, North-Holland Publishing, Amsterdam, NL; C. TYNDALE-BISCOE et al.: "Eurobus, an interface standard for microcomputer systems" * Seite 187 * --- | 5 | RECHERCHIERTE SACHGEBIETE (Int. Cl.4)  G 06 F |
| A | US-A-3 940 743 (FITZGERALD) * Spalte 8, Zeilen 33-65 * ----- | 5 | |

Der vorliegende Recherchenbericht wurde für alle Patentansprüche erstellt

| Recherchenort | Abschlußdatum der Recherche | Prüfer |
|---|---|---|
| DEN HAAG | 09-10-1987 | TOUSSAINT F.M.A. |

EPO FORM 1503 03 82 (P0401)